# EUROPEAN PATENT APPLICATION

(11) **EP 4 546 854 A1**
(43) Date of publication of application: **30.04.2025**
(21) Application number: 23845266.8
(22) Date of filing: 05.07.2023
(51) Int. Cl.: H04W 24/08

(54) **RATE MATCHING METHOD AND APPARATUS**

(30) Priority: 29.07.2022 CN 202210910108
(71) Applicant: Huawei Technologies Co., Ltd., Shenzhen, Guangdong 518129 (CN)
(72) Inventor: YUAN, Shitong, Shenzhen, Guangdong 518129 (CN); FAN, Bo, Shenzhen, Guangdong 518129 (CN); LI, Fang, Shenzhen, Guangdong 518129 (CN)
(74) Representative: Körber, Martin Hans
(86) International application number: PCT/CN2023/105809
(87) International publication number: WO 2024/022053

(57) **Abstract**

This application provides a rate matching method and an apparatus. The method includes: A terminal device measures a reference signal delivered by a serving network device; the terminal device reports a measurement result to the serving network device; and if the measurement result indicates that quality of the reference signal is less than or equal to a first threshold, the terminal device performs rate matching on a transmission resource of a serving cell based on a location of a reference signal resource of a neighboring cell. This method reduces unnecessary rate matching in neighboring cell measurement, enhances rate matching reliability, and improves transmission efficiency.

## Description

### TECHNICAL FIELD

This application relates to the field of communication technologies, and in particular, to a rate matching method and an apparatus.

### BACKGROUND

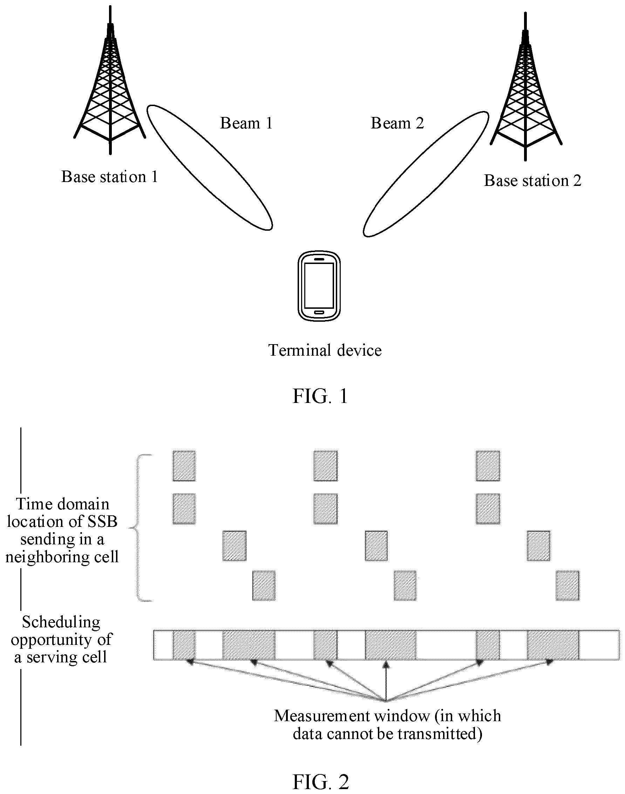

In a 5th generation (5th generation, 5G) mobile communication system, high-frequency communication may be used. In other words, data transmission is performed by using a high-frequency-band signal. A main problem of the high-frequency communication is that signal energy sharply decreases as a transmission distance increases, and this results in a short signal transmission distance. To overcome this problem, the high-frequency communication uses an analog beam technology to concentrate the signal energy in a small angle range, to form a light beam-like signal (referred to as an analog beam, a beam for short), so as to increase a transmission distance. Refer to FIG. 1. The beam is used for transmission between a network device (for example, a base station) and a terminal device.

During uplink and downlink data transmission, the network device and the terminal device need to use a specific beam for the transmission. The specific beam to be used for the transmission is determined in a beam measurement process. For example, the network device may configure one or more resource sets for the terminal device, and each resource set includes one or more resources. For each resource, the network device sends, by using one beam, a reference signal corresponding to the resource, so that the terminal device measures corresponding beam quality. After measuring the reference signal, the terminal device may report reference signal received power (reference signal received power, RSRP) corresponding to each resource, so that the network device learns of quality of a corresponding beam.

To implement cross-cell beam management, the terminal device needs to measure a reference signal of a neighboring cell. When the terminal device measures an intra-frequency neighboring cell, transmission in a current cell (namely, a serving cell) needs to be paused. In a standard protocol, the pause behavior is referred to as rate matching (rate match). Specifically, when the terminal device receives a segment of consecutive transmission resources allocated by the network device, for example, Y consecutive symbols starting from an X^{th} orthogonal frequency division multiplexing (orthogonal frequency division multiplexing, OFDM) symbol in a slot, if there is a reference signal resource, for example, a synchronization signal block (synchronization signal block, SSB), in the segment of consecutive transmission resources, data is not mapped to an OFDM symbol in which the SSB exists. The SSB is also referred to as a synchronization signal and physical broadcast channel (physical broadcast channel, PBCH) block (synchronization signal and PBCH block).

For intra-frequency measurement of layer 1/layer 2 (L1/L2) mobility, if the terminal device has a plurality of candidate cells, and rate matching is performed on SSBs of a plurality of neighboring cells based on an SSB configuration of the neighboring cell to perform neighboring cell measurement, a scheduling resource of the terminal device is affected, and a throughput of the terminal device decreases. For example, refer to FIG. 2. If SSB resource locations of the plurality of neighboring cells are staggered, the terminal device frequently performs rate matching to measure the SSB of the neighboring cell. As a result, transmission in the current cell is frequently interrupted, and transmission efficiency is affected.

In addition, due to factors such as a channel environment or a posture of the terminal device, preconfigured SSBs of the plurality of neighboring cells are measured. Sometimes, the terminal device may fail to measure all the SSBs, or may measure only some of beams of some of the neighboring cells. If the terminal device performs rate matching based only on the SSB configuration of the neighboring cell, the terminal device may perform unnecessary rate matching for a large quantity of times for SSB measurement of the neighboring cell. As a result, the transmission in the current cell is frequently interrupted, and the transmission efficiency is affected.

Therefore, it is an urgent problem to be resolved to reduce a decrease in the transmission efficiency of the terminal device caused by frequent rate matching performed by the terminal device during the neighboring cell measurement, further avoid missing measurement of a reference signal resource of a neighboring cell to the fullest extent, and improve rate matching reliability.

### SUMMARY

This application provides a rate matching method and an apparatus, to improve rate matching reliability.

The method provided in this application may be applied to a terminal device or a chip in the terminal device, or may be applied to a network device or a chip in the network device. A specific execution body of the method is not limited in embodiments of this application. Optionally, the method may be implemented by the terminal device or the network device, or may be jointly implemented by the chip or a plurality of function modules in the terminal device or the network device.

According to an aspect, a rate matching method includes: A terminal device measures a reference signal delivered by a serving network device; the terminal device reports a measurement result to the serving network device; and if the measurement result indicates that quality of the reference signal is less than or equal to a first threshold, the terminal device performs rate matching on a transmission resource of a serving cell based on a location of a reference signal resource of a neighboring cell.

Correspondingly, the serving network device sends the reference signal to the terminal device; receives the measurement result reported by the terminal device by measuring the reference signal; and if the measurement result indicates that the quality of the reference signal is less than or equal to a first threshold, determines that the terminal device needs to perform rate matching, in other words, determines that the terminal device is to perform rate matching on the transmission resource of the serving cell based on the location of the reference signal resource of the neighboring cell. The serving network device performs transmission with the terminal device or needs to allocate the transmission resource to the terminal device with reference to the location of the reference signal resource of the neighboring cell, and does not perform transmission or allocate the transmission resource to the terminal device at a corresponding location.

With reference to the foregoing solution, the serving network device may deliver the reference signal by using one or more beams, and each beam may correspond to one or more reference signals. Therefore, the quality of the reference signal may reflect quality of a beam. If the measurement result indicates that quality of at least one beam is less than or equal to the first threshold, rate matching is performed on the transmission resource of the serving cell based on the location of the reference signal resource of the neighboring cell.

With reference to the foregoing solution, if the measurement result indicates that quality of a beam of the serving cell is less than or equal to the first threshold, rate matching is performed on the transmission resource of the serving cell based on the location of the reference signal resource of the neighboring cell; otherwise, rate matching is not performed.

The location of the reference signal resource of the neighboring cell may be a location of at least one reference signal resource of the neighboring cell, or may be a location of some or all of reference signal resources of the neighboring cell.

There may be a plurality of first thresholds. Different thresholds are associated with different neighboring cells, or different thresholds are associated with different neighboring cell measurement resource sets, in other words, different neighboring cells or measurement resource sets may be associated with different thresholds, some of neighboring cells or measurement resource sets may use one threshold, or all neighboring cells or measurement resource sets share one threshold. Therefore, each threshold may be associated with one or more neighboring cells or one or more measurement resource sets.

When the foregoing condition is met, if the first threshold is associated with a first neighboring cell, rate matching is performed on the transmission resource of the serving cell based on a location of a reference signal resource of the first neighboring cell.

In addition, the first threshold may be a cell-level threshold, or may be a beam-level threshold. For example, serving cells share the first threshold, and one threshold may be associated with one or more measurement resource sets; or different beams use different thresholds, and one threshold may be associated with one or more beams.

According to another aspect, a rate matching method includes: A terminal device measures a reference signal delivered by a network device in a neighboring cell; the terminal device reports a measurement result to a serving network device; and if the measurement result indicates that quality of the reference signal is greater than or equal to a second threshold, the terminal device performs rate matching on a transmission resource of a serving cell based on a location of a reference signal resource of the neighboring cell.

Correspondingly, the network device in the neighboring cell delivers the reference signal; the serving network device receives the measurement result reported by the terminal device by measuring the reference signal; and if the measurement result indicates that the quality of the reference signal is greater than or equal to the second threshold, the serving network device determines that the terminal device needs to perform rate matching, in other words, determines that the terminal device is to perform rate matching on the transmission resource of the serving cell based on the location of the reference signal resource of the neighboring cell. The serving network device performs transmission with the terminal device or needs to allocate the transmission resource to the terminal device with reference to the location of the reference signal resource of the neighboring cell, and does not perform transmission or allocate the transmission resource to the terminal device at a corresponding location.

With reference to the foregoing solution, the network device in the neighboring cell may deliver the reference signal by using one or more beams, and each beam may correspond to one or more reference signals. Therefore, the quality of the reference signal may reflect quality of a beam. If the measurement result indicates that quality of at least one beam is greater than or equal to the second threshold, rate matching is performed on the transmission resource of the serving cell based on the location of the reference signal resource of the neighboring cell.

With reference to the foregoing solution, if the measurement result indicates that quality of a beam of the neighboring cell is greater than or equal to the second threshold, rate matching is performed on the transmission resource of the serving cell based on the location of the reference signal resource of the neighboring cell; otherwise, rate matching is not performed.

The location of the reference signal resource of the neighboring cell may be a location of a reference signal resource corresponding to a reference signal whose quality is greater than or equal to the second threshold, or may be a location of some or all of reference signal resources of the neighboring cell.

There may be a plurality of second thresholds. Different thresholds are associated with different neighboring cells, or different thresholds are associated with different neighboring cell measurement resource sets, in other words, different neighboring cells or measurement resource sets may use different thresholds, some of neighboring cells or measurement resource sets may use one threshold, or all neighboring cells or measurement resource sets share one threshold. Therefore, each threshold may correspond to one or more neighboring cells or one or more measurement resource sets.

When the foregoing condition is met, if the second threshold is associated with a second neighboring cell, rate matching is performed on the transmission resource of the serving cell based on a location of a reference signal resource of the second neighboring cell.

In addition, the second threshold may be a cell-level threshold, or may be a beam-level threshold. For example, neighboring cells share the second threshold, and one threshold may be associated with one or more measurement resource sets; or different beams use different thresholds, and one threshold may be associated with one or more beams.

In the foregoing solution, whether to perform rate matching is determined by using the measurement result of the reference signal, so that rate matching reliability is improved, unnecessary rate matching is further reduced, and transmission efficiency is improved.

According to another aspect, a rate matching method is disclosed. The method includes: A terminal device measures a layer 3 reference signal; reports a layer 3 measurement result to a network device; and if the layer 3 measurement result includes a measurement result of a neighboring cell, performs rate matching on a transmission resource of a serving cell based on a location of a reference signal resource of the neighboring cell.

Correspondingly, the network device receives the layer 3 measurement result reported by the terminal device; and if the layer 3 measurement result includes the measurement result of the neighboring cell, determines that the terminal device needs to perform rate matching, in other words, determines that the terminal device is to perform rate matching on the transmission resource of the serving cell based on the location of the reference signal resource of the neighboring cell. The network device performs transmission with the terminal device or needs to allocate the transmission resource to the terminal device with reference to the location of the reference signal resource of the neighboring cell, and does not perform transmission or allocate the transmission resource to the terminal device at a corresponding location.

With reference to the foregoing solution, if the layer 3 measurement result includes the measurement result of the neighboring cell, and further, the measurement result is greater than or equal to a second threshold, rate matching is performed on the transmission resource of the serving cell based on the location of the reference signal resource of the neighboring cell.

The measurement result of the neighboring cell may be quality of one or more beams, or may be quality of one or more reference signals. One beam may correspond to one or more reference signals. Layer 3 measurement may be performed to measure the serving cell, or may be performed to measure the neighboring cell.

With reference to the foregoing solution, the method further includes: The terminal device receives indication information sent by the network device, where the indication information indicates to perform rate matching on the transmission resource of the serving cell based on the layer 3 (L3) measurement result. The indication information may be associated with the neighboring cell, and may be carried in an L3 measurement configuration.

The location of the reference signal resource of the neighboring cell may be a location of a reference signal resource corresponding to a reference signal or a beam whose quality is greater than or equal to the second threshold, or may be a location of some or all of reference signal resources of the neighboring cell.

In the foregoing solution, whether to perform rate matching is determined by using the layer 3 measurement result, so that rate matching reliability is improved, unnecessary rate matching is further reduced, and transmission efficiency is improved.

According to still another aspect, a rate matching method is disclosed. The method includes: A terminal device receives first configuration information delivered by a network device, where the first configuration information is used to configure a periodicity and a window length of rate matching (rate match); and the terminal device performs rate matching on a transmission resource of a serving cell based on a location of a reference signal resource of a neighboring cell in a corresponding window length based on the periodicity of the rate matching.

Correspondingly, the network device delivers the first configuration information to the terminal device, where the first configuration information is used to configure the periodicity and the window length of the rate matching. The network device determines that the terminal device is to perform rate matching in the corresponding window length. The network device performs transmission with the terminal device in the corresponding window length or needs to allocate the transmission resource to the terminal device with reference to the location of the reference signal resource of the neighboring cell, and does not perform transmission or allocate the transmission resource to the terminal device at a corresponding location.

With reference to the foregoing solution, the method further includes: The terminal device receives second configuration information delivered by the network device, where the second configuration information indicates the terminal device to report a measurement result of at least one neighboring cell.

Further, the second configuration information further indicates a maximum or minimum quantity of beams of the neighboring cell that correspond to a measurement result reported at a single time.

With reference to the foregoing solution, the terminal device reports the measurement result to the network device. If the measurement result includes the measurement result of the neighboring cell, the terminal device performs rate matching on the transmission resource of the serving cell between two adjacent window lengths based on the location of the reference signal resource of the neighboring cell; otherwise, the terminal device does not perform rate matching.

With reference to the foregoing solution, if the measurement result includes the measurement result of the neighboring cell, and the measurement result is greater than or equal to a second threshold, rate matching is performed on the transmission resource of the serving cell between two adjacent window lengths based on the location of the reference signal resource of the neighboring cell; otherwise, the rate matching is not performed.

**In** the foregoing solution, the periodicity and the window length of the rate matching are configured by the network device for the terminal device, and the terminal device performs rate matching based on the configuration of the network device. This reduces a frequency of the rate matching, and improves transmission efficiency. Further, rate matching is performed between adjacent window lengths based on the measurement result, to improve rate matching reliability.

With reference to the foregoing solutions, the measurement result of the neighboring cell is the beam quality of the at least one beam of the neighboring cell, or may be the quality of the one or more reference signals of the neighboring cell, and one beam may correspond to one or more reference signals. The location of the reference signal resource of the neighboring cell may be a location of a reference signal resource corresponding to the at least one beam or the reference signal of the neighboring cell, or may be the location of some or all of the reference signal resources of the neighboring cell.

With reference to the foregoing solutions, the second threshold may be associated with the neighboring cell. Optionally, there may be a plurality of second thresholds. Different neighboring cells use different thresholds, or different thresholds are associated with different neighboring cell measurement resource sets, in other words, different neighboring cells or measurement resource sets may be set with different thresholds, some of neighboring cells or measurement resource sets may use one threshold, or all neighboring cells or measurement resource sets share one threshold. Therefore, each threshold may be associated with one or more neighboring cells or one or more measurement resource sets.

With reference to the foregoing solutions, the rate matching takes effect X ms after the terminal device sends the measurement result or X ms after the network device receives the measurement result, where X may be any value, and is configured by the network device for the terminal device or is preset; and the measurement result is also referred to as a measurement report.

With reference to the solutions in the foregoing aspects, the transmission resource is used to transmit one or more of the following: a physical uplink control channel (physical uplink control channel, PUCCH), a physical uplink shared channel (physical uplink shared channel, PUSCH), a sounding reference signal (sounding reference signal, SRS), a physical downlink control channel (physical downlink control channel, PDCCH), a physical downlink shared channel (physical downlink shared channel, PDSCH), or a channel state information reference signal (channel state information reference signal, CSI-RS). The terminal device sends one or more of the PUCCH, the PUSCH, or the SRS to the network device, and the network device sends one or more of the PDCCH, the PDSCH, or the CSI-RS to the terminal device.

With reference to the solutions in the foregoing aspects, the reference signal resource of the neighboring cell belongs to a measurement resource set configured or activated by the network device. The network device may configure the measurement resource set for the terminal device by using radio resource control (radio resource control, RRC) signaling, and activate the measurement resource set for the terminal device by using a MAC control element (Media Access Control control element, MAC-CE).

With reference to the solutions in the foregoing aspects, the reference signal resource of the neighboring cell is an SSB of the neighboring cell or a CSI-RS resource. The CSI-RS resource may be a CSI-RS resource of the neighboring cell, or may be a CSI-RS resource associated with the SSB of the neighboring cell, or may be a CSI-RS resource associated with the neighboring cell or a physical cell identifier (physical cell identifier, PCI) and the neighboring cell, another cell identifier, or a logical identifier. The CSI-RS resource may be a CSI-RS resource of the serving cell.

With reference to the solutions in the foregoing aspects, the measurement result may be N consecutive measurement results, or may be N measurement results in a period of time, or may be N inconsecutive measurement results, or may be partially consecutive or partially inconsecutive.

With reference to the solutions in the foregoing aspects, the first threshold and the second threshold may be configured by the network device for the terminal device, or may be preset thresholds.

According to another aspect, an embodiment of this application provides a communication apparatus. The apparatus may be used in a terminal device, and has a function of implementing the method in any one of the foregoing aspects or the possible implementations of the foregoing aspects. The function may be implemented by hardware, or may be implemented by hardware executing corresponding software. The hardware or the software includes one or more units corresponding to the function. For example, the apparatus includes a transceiver unit and a processing unit. The transceiver unit may also be referred to as a communication unit or a transceiver module, and the processing unit may also be referred to as a processing module.

According to another aspect, an embodiment of this application provides a communication apparatus. The apparatus may be used in a network device, and has a function of implementing the method in any one of the foregoing aspects or the possible implementations of the foregoing aspects. The function may be implemented by hardware, or may be implemented by hardware executing corresponding software. The hardware or the software includes one or more units corresponding to the function. For example, the apparatus includes a transceiver unit and a processing unit. The transceiver unit may also be referred to as a communication unit or a transceiver module, and the processing unit may also be referred to as a processing module.

The transceiver unit is configured to perform receiving and sending steps of the terminal device or the network device in the foregoing solutions. The transceiver unit may specifically include a receiving unit and a sending unit. The sending unit may perform a sending step, and the receiving unit may perform a receiving step. The processing unit is configured to perform steps other than receiving and sending, for example, judging, determining, or rate matching.

According to another aspect, an embodiment of this application provides a communication apparatus. The communication apparatus includes a processor and a memory. The memory stores a computer program or computer instructions. The processor is configured to execute the computer program or the computer instructions stored in the memory, to enable the processor to implement any one of the foregoing aspects or the possible implementations of the foregoing aspects, or enable the processor to implement any one of the foregoing aspects or the possible implementations of the foregoing aspects.

Optionally, the communication apparatus further includes an interface circuit. The processor is configured to control the interface circuit to receive and send a signal, information, data, and/or the like.

According to another aspect, an embodiment of this application provides a communication apparatus. The communication apparatus includes a processor. The processor is configured to execute a computer program or computer instructions in a memory, to enable the processor to implement the foregoing aspects or any possible implementation, or the processor is configured to perform any one of the foregoing aspects or the possible implementations.

Optionally, the apparatus further includes the memory, where the processor is coupled to the memory through an interface, and the memory is configured to store the computer program or the computer instruction.

Optionally, the communication apparatus further includes an interface circuit. The processor is configured to control the interface circuit to receive and send a signal, information, data, and/or the like.

According to another aspect, an embodiment of this application further provides a computer program product including instructions. When the computer program product runs on a computer, the computer is enabled to perform the solutions in any one of the foregoing aspects and the possible implementations of the foregoing aspects.

According to another aspect, an embodiment of this application further provides a computer-readable storage medium, including computer instructions. When the instructions are run on a computer, the computer is enabled to perform the solutions in any one of the foregoing aspects and the possible implementations of the foregoing aspects.

According to another aspect, an embodiment of this application further provides a chip, including at least one processor, configured to execute a computer program or computer instructions in a memory, to implement the solutions in any one of the foregoing aspects and the possible implementations of the foregoing aspects, or the at least one processor is configured to perform the solutions in any one of the foregoing aspects and the possible implementations of the foregoing aspects.

According to another aspect, an embodiment of this application provides a communication system. The communication system includes the foregoing network device and the foregoing terminal device.

### BRIEF DESCRIPTION OF DRAWINGS

FIG. 1 is a diagram of a beam communication system according to this application;
FIG. 2 is a diagram of rate matching according to this application;
FIG. 3 is a diagram of beam detection according to this application;
FIG. 4 is a diagram of a communication scenario according to an embodiment of this application;
FIG. 5 is a flowchart of a rate matching method according to an embodiment of this application;
FIG. 6 is a scenario diagram of a rate matching method according to an embodiment of this application;
FIG. 7 is a flowchart of a rate matching method according to another embodiment of this application;
FIG. 8 is a flowchart of a rate matching method according to still another embodiment of this application;
FIG. 9 is a diagram of a structure of a communication apparatus according to an embodiment of this application;
FIG. 10 is a diagram of another communication apparatus according to this application; and
FIG. 11 is a diagram of still another communication apparatus according to this application.

### DESCRIPTION OF EMBODIMENTS

The following describes in detail embodiments of this application with reference to the accompanying drawings of the specification.

A communication method provided in embodiments of this application may be applied to a 5th generation (5th generation, 5G) communication system such as 5G new radio (new radio, NR), or may be applied to various communication systems in the future, such as a sixth generation (6th generation, 6G) communication system.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

The following describes some terms in embodiments of this application, to facilitate understanding of a person skilled in the art.

A beam in embodiments of this application is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration indicator state (transmission configuration indicator state, TCI-state) parameter or a spatial relationship (spatial relationship) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relationship, or the like. The foregoing terms are also equivalent to each other. The beam may alternatively be replaced with another term for representing the beam. This is not limited in this application.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using the TCI-state.

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using any one of the spatial relationship, the uplink TCI-state, and a sounding reference signal (sounding reference signal, SRS) resource (indicating a transmission beam using an SRS). Therefore, the uplink beam may alternatively be replaced with the SRS resource.

The transmission beam may refer to distribution of signal strength formed in different directions in space after a signal is transmitted through an antenna, and the reception beam may refer to distribution of signal strength, in different directions in space, of a radio signal received from an antenna.

The technology for forming the beam may be the beamforming technology or another technology. The beamforming technology may be specifically the digital beamforming technology, the analog beamforming technology, the hybrid digital beamforming technology, the hybrid analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (downlink control information, DCI).

Optionally, a plurality of beams that have same or similar communication features may be considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of the resource may be used to uniquely identify the beam corresponding to the resource.

During beam measurement, the network device may send measurement configuration information to the terminal device in advance. The measurement configuration information may include measurement resource configuration information and measurement reporting configuration information. The network device sends a measurement reference signal to the terminal device based on the measurement configuration information.

The measurement resource configuration information includes a related configuration of a measurement resource. For example, the measurement resource may be configured as a three-level resource structure: a resource setting (Resource setting), a resource set (Resource set), and a resource (Resource). The network device may configure one or more resource settings for the terminal device. Each resource setting may include one or more resource sets, and each resource set may include one or more resources. Optionally, each resource may further include one or more ports (ports).

The measurement reporting configuration information includes related information that needs to be measured and reported by the terminal device. Optionally, the measurement reporting configuration information includes one or more of the following: a report quantity (report quantity), indication information of a calculation method used for the report quantity, and a measurement resource associated with the measurement reporting configuration information (for example, one or more resource settings and/or resource sets and/or resources associated with the measurement reporting configuration). The report quantity may include one or more of the following information: a channel measurement reference signal resource identifier, an interference resource identifier, reference signal received power (reference signal received power, RSRP), reference signal received quality (reference signal received quality, RSRQ), a signal to interference plus noise ratio (signal to interference plus noise ratio, SINR), a received signal strength indicator (received signal strength indicator, RSSI), channel state information (channel state information, CSI), a channel quality indicator (channel quality indicator, CQI), a precoding matrix indicator (precoding matrix indicator, PMI), a precoding type indicator (precoding type indicator, PTI), a diversity indication (rank indication, RI), and the like. It should be understood that the foregoing merely provides an example of information that may be included in the measurement reporting configuration information. The measurement reporting configuration information may further include other information. This is not limited in embodiments of this application.

After receiving the measurement configuration information of the network device, the terminal device may perform measurement based on the measurement configuration information. For example, if the measurement reporting configuration information in the measurement configuration information includes the reference signal received quality RSRQ and the signal to interference plus noise ratio SINR, the terminal device needs to measure a resource indicated by the measurement resource configuration information, and report the measured RSRQ and the measured SINR to the network device.

In NR (new radio), a beam indicator of a beam used by a downlink channel or a beam indicator of a beam for sending a reference signal is implemented by associating with a reference resource index in a transmission configuration indicator (transmission configuration indicator, TCI) state table.

Specifically, the base station may configure a TCI-state table by using radio resource control (radio resource control, RRC) signaling, and each TCI-state table includes several TCI-states. Each TCI-state includes a TCI-state identifier (TCI-RS-Set ID), one or two quasi-co-location (quasi-co-location, QCL) type indications (QCL-type A/B/C/D), and a reference signal identifier (reference signal identifier, RS-ID) corresponding to each type indication. QCL types include the following:
QCL-Type A: {Doppler frequency shift, Doppler spread, average delay, and delay spread};
QCL-Type B: {Doppler frequency shift and Doppler spread};
QCL-Type C: {Average delay and Doppler frequency shift}; and
QCL-Type D: {Spatial reception parameter}.

The QCL-type D represents spatial quasi-co-location. When a reception beam needs to be indicated, the network device indicates a TCI-state including spatial quasi-co-location information by using higher layer signaling or control information. The terminal device reads a reference RS-ID corresponding to the QCL-type D based on the TCI-state. The terminal device may then perform receiving based on a currently maintained spatial reception configuration (the reception beam) corresponding to the RS-ID.

Spatial quasi-co-location (spatial QCL): The spatial QCL may be considered as a type of QCL. "Spatial" may be understood from two perspectives: from a transmitting end and from a receiving end. From the perspective of the transmitting end, if two antenna ports are spatially quasi-co-located, it means that beam directions corresponding to the two antenna ports are spatially consistent. From the perspective of the receiving end, if two antenna ports are spatially quasi-co-located, it means that the receiving end can receive, in a same beam direction, signals sent through the two antenna ports.

A channel measurement reference signal resource is a resource used by a reference signal sent on a to-be-measured beam. The channel measurement reference signal resource is used to measure beam quality, in other words, is used to measure quality of a beam for sending a reference signal. The measurement result (RSRQ/SINR/RSRP) and the like in embodiments of this application are all measurement results for the channel measurement reference signal resource.

In embodiments of this application, "a plurality of" means two or more. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

A network device in embodiments of this application may be a device in a wireless network. For example, the network device may be a device that is deployed in a radio access network and that provides a wireless communication function for a terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in a 5G mobile communication system. Alternatively, the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control RRC layer and a packet data convergence protocol (packet data convergence protocol, PDCP) layer. The DU is responsible for processing a physical layer protocol and a real-time service, and implements functions of a radio link control (radio link control, RLC) layer, a media access control (Media Access Control, MAC) layer, and a physical (physical, PHY) layer. The AAU implements some physical layer processing functions, radio frequency processing, and a function related to an active antenna. Information at the RRC layer is finally changed to information at the PHY layer, or is changed from the information at the PHY layer. Therefore, in this architecture, higher layer signaling (for example, RRC layer signaling) may also be considered as being sent by the DU, or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in vehicle to everything, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in an internet of things (Internet of Things, IoT), and a wireless terminal in a smart home (smart home). For example, the wireless terminal in the vehicle to everything may be a vehicle-mounted device, an entire vehicle device, a vehicle-mounted module, or a vehicle. The wireless terminal in the industrial control may be a camera, a robot, or the like. The wireless terminal in the smart home may be a television, an air conditioner, a sweeper, a speaker, a set-top box, or the like.

The following briefly describes a technology of performing communication by using a beam.

In a 5G communication system, a beam may be used for data transmission between the network device and the terminal device. The network device may determine a beam to be used, and the terminal device uses a beam based on an indication of the network device. For example, the network device sends downlink control information to the terminal device, where the downlink control information includes a transmission configuration index TCI field, the TCI field may indicate a TCI-state, the TCI-state is used for uplink transmission or downlink transmission, and the TCI-state includes a target reference signal resource. When downlink transmission is performed by using the TCI-state, the terminal device performs receiving by using a reception beam corresponding to the target reference signal resource. Because the reception beam corresponding to the target reference signal resource is already determined by the terminal device, the network device may indicate a correct reception beam to the terminal device. When uplink transmission is performed by using the TCI-state, the terminal device performs sending by using a transmission beam corresponding to the target reference signal, or performs sending by using a transmission beam corresponding to the target reference signal.

When a signal is transmitted between the terminal device and the network device, the network device may configure one or more resource sets for the terminal device. Each resource set includes one or more resources. For each resource, the network device sends, by using one beam, a signal corresponding to the resource, to measure corresponding beam quality. After performing measurement, the terminal device may report the beam quality. For example, the terminal device may report RSRP of one or more resources, indicating corresponding beam quality.

In the standard Rel-16 and earlier releases, layer 1 (L1) measurement supports only measurement of a resource of a serving cell. For example, the terminal device measures an SSB of a current serving cell, or measures a CSI-RS resource configured for the current serving cell. Therefore, the resource set configured by the network device includes only the resource of the serving cell.

In the standard release Rel-17, to implement cross-cell beam management, a resource of a neighboring cell needs to be measured. The L1 measurement further supports measurement of a reference signal associated with a physical cell identifier (physical cell identifier, PCI) of a non-serving cell. For example, when an SSB of the neighboring cell needs to be measured, the network device configures, in an RRC configuration, an additional PCI associated with the SSB to be measured by the terminal device, to indicate that the SSB is not an SSB of the current serving cell. Therefore, the resource set configured by the network device includes the resource of the serving cell and a resource of the non-serving cell.

For measurement of a CSI-RS of the neighboring cell, a QCL relationship of the CSI-RS needs to be configured as the SSB associated with the PCI of the neighboring cell. In other words, even if the CSI-RS of the neighboring cell needs to be measured to obtain quality of a beam of the neighboring cell, the terminal device does not obtain a CSI-RS configuration of the neighboring cell, but completes measurement on the SSB of the neighboring cell based on the CSI-RS resource of the serving cell and QCL.

In the cross-cell beam management, when the terminal device receives a PDSCH or a PDCCH from the neighboring cell, if a reference signal resource, such as the SSB, of the neighboring cell also exists, rate matching is performed, in other words, transmission of the PDSCH or the PDCCH is interrupted on an SSB resource, and the SSB is preferentially measured.

Therefore, for an SSB for which L1-RSRP measurement is configured, the terminal device does not perform uplink sending or downlink receiving on a same symbol of the SSB. Descriptions in the standard are as follows.

The UE is not expected to transmit a PUCCH/a PUSCH/an SRS or receive a PDCCH/PDSCH/CSI-RS for tracking/CSI-RS for a CQI on symbols corresponding to the SSB indexes configured for L1-RSRP measurement, where the transmission of the PUCCH/PUSCH/SRS and reception of the PDCCH/PDSCH/CSI-RS for tracking/CSI-RS for the CQI may be on a serving cell(s) and a cell(s) with a PCI different from the serving cell(s).

In other words, the UE is not expected to send a PUCCH/a PUSCH/an SRS or receive a PDCCH/PDSCH/CSI-RS for tracking/CSI-RS for a CQI on a symbol corresponding to an SSB index configured for the L1-RSRP measurement. Transmission of the PUCCH/PUSCH/SRS and reception of the CSI-RS of the PDCCH/PDSCH/CSI-RS for tracking/CQI may be performed in a serving cell(s) and a cell(s) with a PCI different from that of the serving cell(s).

The uplink sending includes sending a PUCCH, a PUSCH, an SRS, or the like. The downlink receiving includes receiving a PDCCH, a PDSCH, a CSI-RS, or the like.

For intra-frequency measurement of layer 1/layer 2 (L1/L2) mobility, if the terminal device has a plurality of candidate cells, and rate matching needs to be performed on SSBs of a plurality of neighboring cells based on an SSB configuration of the neighboring cell to perform neighboring cell measurement. In this case, uplink and downlink transmission of the serving cell is interrupted on a corresponding SSB. This affects a scheduling resource of the terminal device, and results in a decrease in a throughput of the terminal device. For example, refer to FIG. 2. If SSB resource locations of the plurality of cells are staggered, the terminal device needs to frequently perform rate matching to measure an SSB. As a result, transmission in a current cell is frequently interrupted, and transmission efficiency is affected.

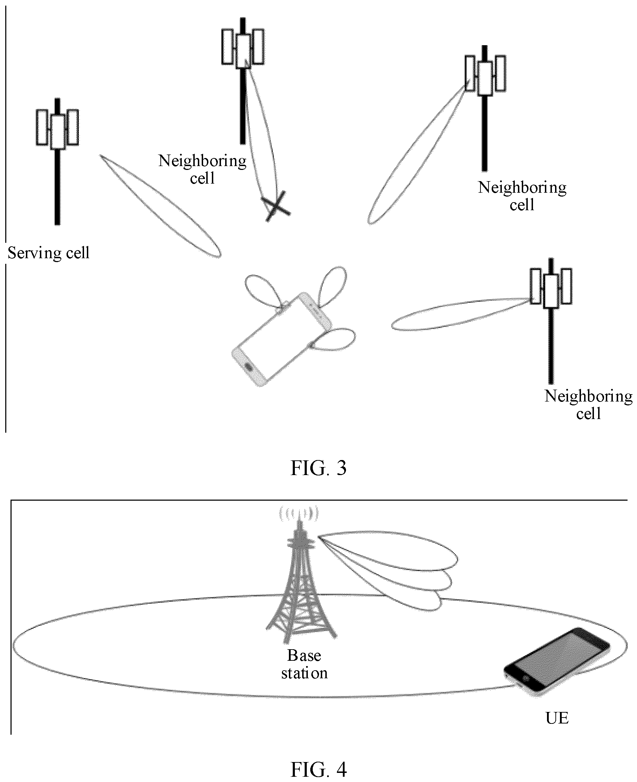

In addition, due to factors such as a channel environment or a posture of the terminal device. Refer to FIG. 3. For preconfigured SSBs of the plurality of neighboring cells, sometimes, the terminal device may fail to measure all the SSBs, or may measure only some of beams of some of the neighboring cells. If the terminal device performs rate matching based only on the SSB configuration of the neighboring cell, the terminal device may perform unnecessary neighboring cell measurement for a large quantity of times. As a result, the transmission in the current cell is frequently interrupted, and the transmission efficiency is affected.

This application provides a rate matching method, to reduce transmission interruption caused by frequent neighboring cell measurement of a terminal device, and improve transmission efficiency.

A communication system to which this application is applied mainly includes a network device (for example, a base station) and a terminal device (for example, UE), or may include one or more network devices and one or more terminal devices. In FIG. 4, one network device and one terminal device are used as an example. The network device may send data or control signaling to the terminal device. For example, the terminal device measures a reference signal based on configuration information of the network device, and reports a measurement result of the reference signal, that is, a measurement result of a corresponding beam, to switch a serving beam of the terminal device.

The method disclosed in this application may be applied to a plurality of scenarios. Examples are as follows:
Scenario 1: Inter-cell transmission model (The terminal device is switched to a beam of another cell after reporting a measurement result)
   A scenario in which the terminal device measures a reference signal of a beam of a non-serving cell and reports the measurement result to a current serving cell, and after the beam of the non-serving cell is switched, the terminal device receives a PDCCH/PDSCH from another cell but the serving cell is not handed over may be simply understood as that the terminal device receives a signal from an antenna of another cell, but the serving cell remains unchanged.
Scenario 2: Intra-cell transmission model (The terminal device is handed over to another beam of a serving cell)
   For a case in which the terminal device measures a reference signal of a non-serving beam of a current serving cell and reports a measurement result to the current serving cell, and a serving beam is switched to a reported beam based on a configuration, the terminal only measures a beam of a non-serving cell, but the terminal does not actually perform data transmission based on the beam of the non-serving cell.
Scenario 3: Mobility scenario

The terminal device may move between cells, and to reduce impact of movement of the terminal device on communication performance for a current serving cell, the terminal device is configured to measure a reference signal of a neighboring cell and report a measurement result. In this scenario, the terminal device may not need to perform beam switching, but needs to measure one or more reference signals. The measured reference signal may be a reference signal of the current serving cell, or may be a reference signal of a non-serving cell.

The foregoing application scenarios are merely examples, and the application scenario is not limited to the foregoing scenarios.

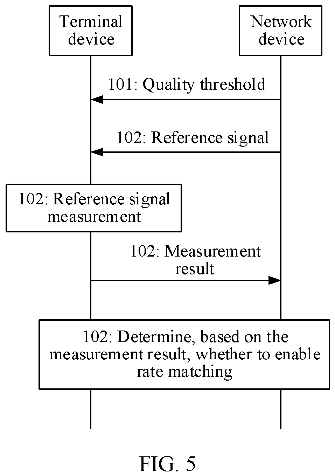

In some embodiments, refer to FIG. 5. A rate matching method includes the following steps.

101: A network device configures a quality threshold for a terminal device.

The quality threshold includes a first threshold and/or a second threshold. The first threshold is for a serving cell, and the second threshold is for a neighboring cell. The threshold may be a beam-level threshold or a cell-level threshold. The threshold may be configured by the network device for the terminal device, or may be preset.

For example, the first threshold may be configured for a measurement resource set of the serving cell. There may be one or more measurement resource sets of the serving cell, and different measurement resource sets may use different thresholds. Each measurement resource set may be configured with one threshold, or a plurality of measurement resource sets may be uniformly configured with one threshold. Therefore, one threshold may correspond to one or more measurement resource sets. In addition, the first threshold may alternatively be a cell-level threshold, and the serving cell uses one threshold.

The first threshold may alternatively be a beam-level threshold, in other words, different thresholds are set for different beams of the serving cell. One threshold may correspond to one or more beams, in other words, one threshold may correspond to one or more reference signal resources.

Further, when there are a plurality of first thresholds, the first threshold may correspond to different neighboring cells, in other words, one threshold may be associated with one or more neighboring cells. For example, the first threshold may be associated with a neighboring cell PCI or an additional PCI.

Similar to the first threshold, the second threshold may be configured for a measurement resource set of the neighboring cell. There may be one or more measurement resource sets of the neighboring cell, and different measurement resource sets may use different thresholds. Each measurement resource set may be configured with one threshold, or a plurality of measurement resource sets may be uniformly configured with one threshold. Therefore, one threshold may correspond to one or more measurement resource sets. In addition, the first threshold may alternatively be a cell-level threshold, and one or more neighboring cells use one threshold.

The second threshold may alternatively be a beam-level threshold, in other words, different thresholds are set for different beams of the neighboring cell. One threshold may correspond to one or more beams, in other words, one threshold may correspond to one or more reference signal resources.

The threshold is a reference signal quality threshold or a beam quality threshold, for example, an RSRP threshold of an SSB or a CSI-RS. The network device may deliver the threshold by using configuration information or indication information.

The measurement resource set may be a measurement resource set configured by using RRC, or may be a measurement resource set activated by using a MAC-CE or DCI.

102: The terminal device measures a reference signal delivered by the network device, and reports a measurement result to the network device.

There may be one or more reference signals, and the one or more reference signals may be delivered by using one or more beams. The one or more beams correspond to one or more resources in the measurement resource set, and the correspondence a one-to-one correspondence, or may be a one-to-many or a many-to-one correspondence. The reference signal may be an SSB, a CSI-RS, or the like. Because the reference signal is delivered by using a beam, quality of the reference signal is quality of the beam for sending the reference signal, and each beam may be used to send one or more reference signals.

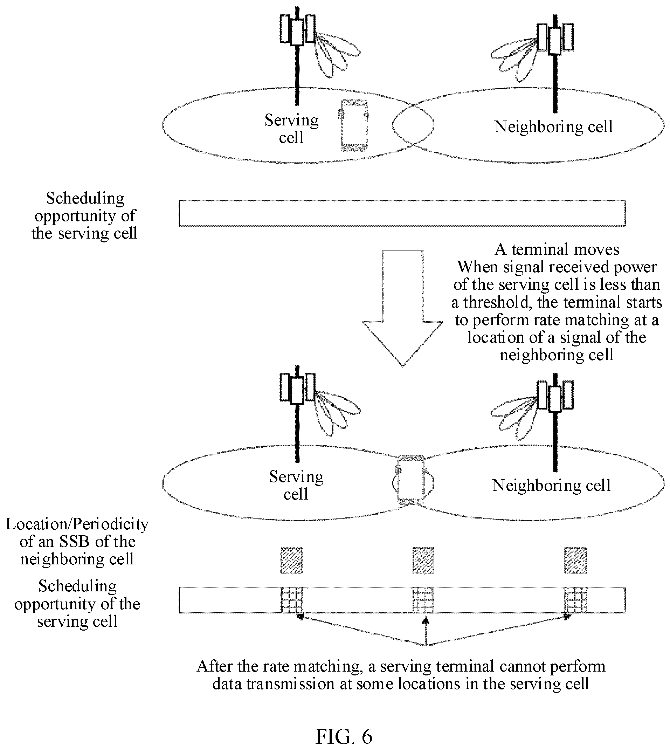

In an example, the foregoing network device may be a serving network device, in other words, the terminal device measures a reference signal delivered by the serving network device by using one or more beams, and reports a measurement result. If the measurement result indicates that quality of at least one beam or the reference signal is greater than or equal to the first threshold, where in this case, the quality of the beam of the serving cell is good, the terminal device does not need to start neighboring cell measurement, and does not need to perform rate matching on a transmission resource of the serving cell based on a location of a reference signal resource of the neighboring cell, as shown in an upper figure in FIG. 6. The terminal device may perform normal uplink and downlink transmission on a transmission resource scheduled by the network device, for example, send a PUCCH, a PUSCH, an SRS, or the like, or receive a PDCCH, a PDSCH, a CSI-RS, or the like.

If the measurement result indicates that the quality of the at least one beam or the reference signal is less than or equal to the first threshold, where in this case, the quality of the beam of the serving cell is poor, the terminal device needs to start neighboring cell measurement, as shown in a lower figure in FIG. 6. Therefore, the terminal device performs rate matching on the transmission resource of the serving cell based on the location of the reference signal resource of the neighboring cell. If the transmission resource allocated by the network device includes the reference signal resource of the neighboring cell, for example, an SSB, the uplink and downlink transmission in the serving cell is interrupted on the reference signal resource of the neighboring cell.

Further, there may be a plurality of measurement results, for example, N consecutive measurement results or N inconsecutive measurement results in a period of time. If the N consecutive measurement results of the terminal device all indicate that the quality of the at least one beam or the reference signal is greater than or equal to the first threshold, or the N measurement results of the terminal device in a preset time period all indicate that the quality of the at least one beam or the reference signal is greater than or equal to the first threshold, the terminal device does not need to start neighboring cell measurement, and does not need to perform rate matching on the transmission resource of the serving cell based on the location of the reference signal resource of the neighboring cell. On the contrary, if the N consecutive measurement results of the terminal device all indicate that the quality of the at least one beam or the reference signal is less than or equal to the first threshold, or the N measurement results of the terminal device in the preset time period all indicate that the quality of the at least one beam or the reference signal is less than or equal to the first threshold, the terminal device needs to start neighboring cell measurement. Therefore, the terminal device performs rate matching on the transmission resource of the serving cell based on the location of the reference signal resource of the neighboring cell. N is an integer greater than 1, and may be preset, or may be configured by the network device for the terminal device.

Further, there may be a plurality of first thresholds that correspond to different neighboring cells. One threshold may be associated with one or more neighboring cells. For example, the first threshold may be associated with a cell identifier, for example, a PCI or an additional PCI. When quality of a beam reported by the terminal device meets a corresponding threshold, rate matching is performed on a reference signal resource of a corresponding cell.

For example, if the measurement result indicates that the quality of the at least one beam or the reference signal is less than or equal to the first threshold, and the first threshold is associated with a PCI of a first neighboring cell, the terminal device performs rate matching on the transmission resource of the serving cell based on a location of a reference signal resource of the first neighboring cell. The measurement result may be measurement results of N times of measurement.

Further, if the quality of the beam of the serving cell changes, for example, if the measurement result indicates that the quality of the at least one beam or the reference signal is greater than or equal to the first threshold, the terminal device disables the rate matching. The measurement result may be the measurement results of the N times of measurement. Further, if the first threshold is associated with the PCI of the first neighboring cell, the terminal device disables the rate matching for the first neighboring cell.

The reference signal resource of the neighboring cell may be one or more reference signal resources of other cells in the measurement resource set, and the other cells may be some of neighboring cells, or may be all neighboring cells.

A reporting manner of the measurement result is periodic or semi-persistent measurement reporting. The reporting manner may be configured by the network device for the terminal device, or may be preset. Different measurement resource sets may use different reporting manners, or may use a same reporting manner.

In addition, it may be further specified that a periodic or semi-persistent reporting result meets a preset condition. For example, after periodic or semi-persistent reporting is performed for N times, where N is an integer greater than 1, the foregoing rule of enabling or disabling the rate matching takes effect.

Correspondingly, after receiving the measurement result of the terminal device, the network device may determine, based on the measurement result, whether the terminal device is to enable the rate matching. A determining manner is the same as a determining manner of the terminal device, and details are not described.

The following uses two cases as examples for description.

### (1) In a case of L1 measurement

When an L1-RSRP measurement result reported by the terminal device is, for example, that at least one beam or all beams are greater than the first threshold, where in this case, the quality of the beam of the serving cell is good, the terminal device does not need to measure an SSB of the neighboring cell. Therefore, the rate matching does not need to be enabled, in other words, rate matching does not need to be performed on the transmission resource of the serving cell based on a location of an SSB of another cell in the measurement resource set.

When the L1-RSRP measurement result reported by the terminal device is, for example, that the at least one beam or all beams are less than the first threshold, where in this case, the quality of the beam of the serving cell is poor, the terminal device needs to enable the rate matching, in other words, perform rate matching on the transmission resource of the serving cell based on the location of the SSB of the another cell in the measurement resource set, to measure the SSB of the neighboring cell.

### (2) In a case of L3 measurement

When the L3-RSRP measurement result reported by the terminal device is, for example, that a beam-level L3 measurement result of any beam or a cell-level measurement result of L3 filtering is greater than or equal to the first threshold, the terminal device does not need to perform neighboring cell measurement. Therefore, the rate matching does not need to be enabled, in other words, rate matching does not need to be performed on the transmission resource of the serving cell based on a location of an SSB of another cell in the measurement resource set.

When the L3-RSRP measurement result reported by the terminal device is, for example, that the beam-level L3 measurement result of any beam or the cell-level measurement result of the L3 filtering is less than or equal to the first threshold, the terminal device needs to perform neighboring cell measurement. Therefore, the terminal device needs to enable the rate matching, in other words, perform rate matching on the transmission resource of the serving cell based on the location of the SSB of the another cell in the measurement resource set, to measure an SSB of the neighboring cell.

In another example, the terminal device may measure a reference signal delivered by a network device in the neighboring cell, and report a measurement result to the serving network device.

Similar to the foregoing example, the reference signal may be delivered by using one or more beams, and each beam corresponds to one or more reference signals.

If the measurement result indicates that quality of at least one beam or reference signal is greater than or equal to the second threshold, where in this case, quality of a beam of the neighboring cell is good, the terminal device needs to start neighboring cell measurement, in other words, perform rate matching on the transmission resource of the serving cell based on the location of the reference signal resource of the neighboring cell. If a transmission resource allocated by the network device includes the reference signal resource of the neighboring cell, for example, an SSB, uplink and downlink transmission in the serving cell is interrupted on the reference signal resource of the neighboring cell.

If the measurement result indicates that the quality of the at least one beam or the reference signal is less than or equal to the second threshold, where in this case, the quality of the beam of the neighboring cell is poor, the terminal device does not need to start neighboring cell measurement. Therefore, the terminal device does not need to enable the rate matching. The terminal device may perform normal uplink and downlink transmission on the transmission resource scheduled by the network device, for example, send a PUCCH/a PUSCH/an SRS, or receive a PDCCH/PDSCH/CSI-RS.

Further, there may be a plurality of measurement results, for example, N consecutive measurement results or N inconsecutive measurement results in a period of time. If the N consecutive measurement results of the terminal device all indicate that the quality of the at least one beam or the reference signal is greater than or equal to the second threshold, or the N measurement results of the terminal device in a preset time period all indicate that the quality of the at least one beam or the reference signal is greater than or equal to the second threshold, the terminal device needs to start neighboring cell measurement, in other words, perform rate matching on the transmission resource of the serving cell based on the location of the reference signal resource of the neighboring cell. On the contrary, if the N consecutive measurement results of the terminal device all indicate that the quality of the at least one beam or the reference signal is less than or equal to the second threshold, or the N measurement results of the terminal device in the preset time period all indicate that the quality of the at least two beams or the reference signal is less than or equal to the first threshold, the terminal device does not need to start neighboring cell measurement. Therefore, the terminal device does not need to enable the rate matching. N is an integer greater than 1, and may be preset, or may be configured by the network device for the terminal device.

Further, there may be a plurality of second thresholds that correspond to different neighboring cells. For example, the second threshold may be associated with a cell identifier, for example, a PCI or an additional PCI. When quality of a beam reported by the terminal device meets a corresponding threshold, rate matching is performed on a reference signal resource of a corresponding cell.

For example, if the measurement result indicates that the quality of the at least one beam or the reference signal is greater than or equal to the second threshold, and the second threshold is associated with a PCI of a second neighboring cell, the terminal device performs rate matching on the transmission resource of the serving cell based on a location of a reference signal resource of the second neighboring cell. The measurement result may be measurement results of N times of measurement.

Further, if the quality of the beam of the serving cell changes, for example, if the measurement result indicates that the quality of the at least one beam or the reference signal is less than or equal to the second threshold, the terminal device disables the rate matching. The measurement result may be the measurement results of the N times of measurement. Further, if the second threshold is associated with the PCI of the second neighboring cell, the terminal device disables rate matching for the second neighboring cell.

Other cases such as the reporting manner are similar to those in the first example, refer to related descriptions. Details are not described again.

In the foregoing examples, the network device may determine, based on the measurement result reported by the terminal device, whether the terminal device enables the rate matching. If it is determined that the terminal device enables the rate matching, the network device needs to consider the location of the reference signal resource of the neighboring cell when allocating the transmission resource or performing transmission, and does not allocate the resource or perform transmission at a corresponding location.

In this application, transmission includes sending and receiving. In the foregoing examples, the measurement resource set may be a measurement resource set configured by using RRC, or may be a measurement resource set activated by using a MAC-CE or DCI.

The SSB of the another cell may alternatively be replaced with a CSI-RS, for example, a CSI-RS associated with the SSB of the another cell.

With reference to the foregoing implementations, the network device may configure a reporting manner of the measurement resource set as periodic or semi-persistent measurement reporting; or the network device activates some aperiodic measurement configurations by using DCI, and the reporting manner may be aperiodic measurement reporting.

In the foregoing solution, the terminal device measures the reference signal resource delivered by the network device, and reports the measurement result. The network device and the terminal device may determine, based on the measurement result, whether to enable the rate matching. This reduces unnecessary rate matching, improves rate matching reliability, and improves transmission efficiency.

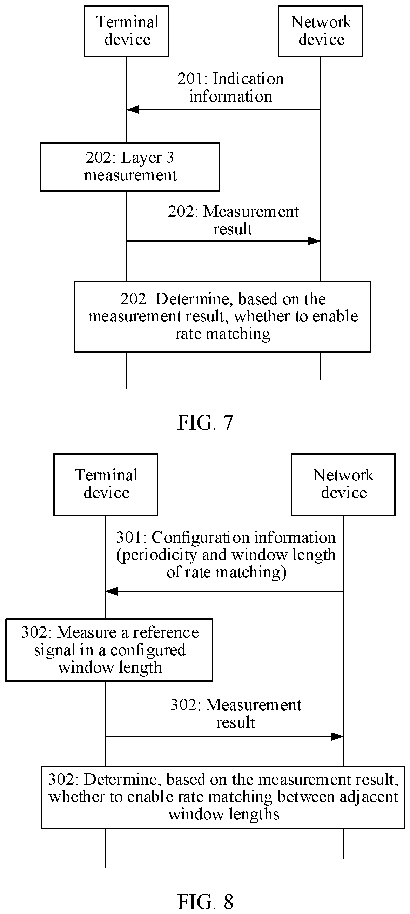

Because the layer 1 measurement supports measurement of configured reference signal resources, including reference signal resources of a current cell and a neighboring cell, if reference signal resources of a plurality of neighboring cells are configured, during the layer 1 measurement, the reference signal resources of the plurality of neighboring cells need to be measured, and rate matching is performed on the transmission resource of the serving cell based on the reference signal resources of the plurality neighboring cells. Sometimes, the terminal device is far away from some neighboring cells, and reference signals of these neighboring cells cannot be measured. If rate matching is performed on the transmission resource of the serving cell based on the reference signal resources of these neighboring cells, a waste of transmission resources is caused. In another embodiment, the layer 3 measurement result may be used to determine whether to adjust the reference signal resource of the neighboring cell in the layer 1 measurement, to reduce unnecessary rate matching and improve transmission efficiency. Refer to FIG. 7. The method includes the following steps.

201: A network device sends indication information to a terminal device, to indicate whether to perform rate matching based on an L3 measurement result, for example, an RRC measurement report. The indication information may be carried in an L3 measurement configuration or an L3 reporting configuration.

The indication information is optional, and both parties may perform rate matching based on the L3 measurement result by default.

The indication information may be a switch. For example, 1 and 0 indicate whether to perform rate matching on a transmission resource of a serving cell based on the L3 measurement result.

Alternatively, an implicit indication may be used. If the L3 measurement configuration includes the indication information, it indicates that rate matching is to be performed on the transmission resource of the serving cell based on the L3 measurement result. If the L3 measurement configuration does not include the indication information, it indicates that rate matching is not to be performed on the transmission resource of the serving cell based on the L3 measurement result, and rate matching is performed based on a synchronization signal measurement timing configuration (SSB measurement timing configuration, SMTC) by default to ensure measurement of a reference signal of a neighboring cell.

In addition, the indication information may be configured for all neighboring cells, or may be configured for one or some of the neighboring cells. For example, the indication information is configured for a neighboring cell with a specified PCI. In this case, rate matching is adjusted only for a neighboring cell configured with the indication information.

202: The terminal device performs L3 measurement, and reports the measurement result to the network device.

L3 measurement may be performed to measure a reference signal of the serving cell, that is, a reference signal sent by the serving network device; or may be performed to measure the reference signal of the neighboring cell, that is, a reference signal sent by a network device in the neighboring cell. For example, in an actual implementation, when the terminal device is located at a cell edge, the terminal device may measure the reference signal of the neighboring cell.

The measurement result is reported to the serving network device. If the layer 3 measurement result includes the measurement result of the reference signal of the neighboring cell, rate matching is performed on the transmission resource of the serving cell based on a location of a reference signal resource of the neighboring cell, in other words, rate matching needs to be performed on the reference signal resource of the neighboring cell in subsequent L1 measurement.

For example, if an L1 measurement configuration includes reference signal resources of three neighboring cells, and the L3 measurement result includes measurement results of only two neighboring cells, rate matching is performed on the transmission resource of the serving cell based on locations of the reference signal resources of the two neighboring cells, and rate matching does not need to be performed on the reference signal resource of the other neighboring cell, in other words, subsequent L1 measurement is performed only for the two neighboring cells, and L1 measurement does not need to performed for the other neighboring cell because a reference signal of the other neighboring cell cannot be measured.

Further, a second threshold may be set for the measurement result of the neighboring cell, for example, an RSRP threshold of an SSB or a CSI-RS. The second threshold may be configured by the network device for the terminal device, or may be preset. For example, the second threshold may be carried in the L3 measurement configuration in 201, and may be a cell-level threshold. For example, a corresponding threshold is configured for each neighboring cell, or a threshold may be uniformly configured for all neighboring cells. This is similar to the foregoing embodiment, and details are not described again.

If the layer 3 measurement result includes that the measurement result of the reference signal of the neighboring cell is greater than or equal to the second threshold, where in this case, the signal of the neighboring cell is good, the terminal device performs rate matching on the transmission resource of the serving cell based on the location of the reference signal resource of the neighboring cell.

If the layer 3 measurement result includes that the measurement result of the reference signal of the neighboring cell is less than or equal to the second threshold, where in this case, the signal of the neighboring cell is poor, the terminal device does not need to enable the rate matching, in other words, does not perform rate matching on the transmission resource of the serving cell based on the location of the reference signal resource of the neighboring cell.

Further, if the indication information is configured only for some of neighboring cells, when the L3 measurement result reported by the terminal device includes a neighboring cell for which the indication information is configured, the rate matching needs to be performed on a reference signal resource of the neighboring cell in the subsequent L1 measurement. The following gives examples.

If the layer 3 measurement result includes the measurement result of the reference signal of the neighboring cell, and the neighboring cell is configured with or associated with the indication information, rate matching is performed on the transmission resource of the serving cell based on the location of the reference signal resource of the neighboring cell, in other words, rate matching needs to be performed on the reference signal resource of the neighboring cell in the subsequent L1 measurement.

If the layer 3 measurement result includes the measurement result of the reference signal of the neighboring cell, but the neighboring cell is not configured with or associated with the indication information, rate matching does not need to be enabled, in other words, rate matching is not performed on the transmission resource of the serving cell based on the location of the reference signal resource of the neighboring cell. Therefore, the terminal device does not perform rate matching on the reference signal resource of the neighboring cell in the subsequent L1 measurement.

It is assumed that a corresponding second threshold is also set for the neighboring cell for which the indication information is configured. If the layer 3 measurement result includes that the measurement result of the reference signal of the neighboring cell is greater than or equal to the second threshold, and the neighboring cell is configured with or associated with the indication information, rate matching is performed on the transmission resource of the serving cell based on the location of the reference signal resource of the neighboring cell; otherwise, the rate matching is not enabled.

If the L3 measurement result is a beam-level measurement result, and the layer 3 measurement result includes a measurement result of a beam of the neighboring cell, rate matching is performed on the beam of the neighboring cell in the subsequent L1 measurement, in other words, rate matching is performed on the transmission resource of the serving cell based on the location of the reference signal resource corresponding to the beam of the neighboring cell. For example, rate matching is performed on the transmission resource of the serving cell based on an SSB resource and a QCL CSI-RS resource that correspond to the beam.

Similarly, the network device may also set a corresponding threshold for beam-level measurement. For example, the second threshold is a beam-level threshold. If the layer 3 measurement result includes the measurement result of the beam of the neighboring cell, and quality of the beam is greater than or equal to the second threshold, rate matching is performed on the transmission resource of the serving cell based on the location of the reference signal resource corresponding to the beam of the neighboring cell. If the quality of the beam is less than or equal to the second threshold, the rate matching does not need to be enabled.

After receiving the L3 measurement result reported by the terminal device, the network device may determine, based on content of the measurement result, whether the terminal device is to enable the rate matching. A determining method is similar to a determining method of the terminal device, and details are not described again.

Rate matching start time may be X ms after an L3 measurement report is reported and determined, X ms after the network device receives the L3 measurement report of the terminal device, or X ms after the terminal device sends the L3 measurement report, the terminal device enables the rate matching, and the network device determines that the terminal enables the rate matching, where X is an integer.

Alternatively, after the terminal device reports the L3 measurement report, when the terminal device performs L1 measurement (including a group of measurement operations for a plurality of reference signals) for the first time, the terminal device enables the rate matching, and the network device determines that the terminal enables the rate matching.

In the foregoing embodiment, signal quality of the neighboring cell may be determined through the L3 measurement, to determine whether to enable the rate matching, reduce unnecessary rate matching, enhance rate matching reliability, and improve transmission efficiency.

In another embodiment, the network device may configure a periodicity and a window length of the rate matching for the terminal device. In a corresponding window length, the terminal device enables the rate matching. Between two adjacent window lengths, the terminal device determines, based on a measurement result, whether to enable the rate matching. Refer to FIG. 8. The method includes the following steps.

301: A network device sends first configuration information to a terminal device, where the first configuration information is used to configure a periodicity and a window length of rate matching for the terminal device.

302: The terminal device measures a reference signal based on the periodicity of the rate matching in the corresponding window length, and enables the rate matching, in other words, performs rate matching on a transmission resource of a serving cell based on a location of a reference signal resource of a neighboring cell, and reports a measurement result to the network device.

For example, when measuring an SSB of the neighboring cell in the window length of the rate matching, the terminal device performs rate matching on the transmission resource of the serving cell, such as a PDCCH or a PDSCH, based on a location of the SSB of the neighboring cell, in other words, does not transmit the PDCCH, the PDSCH, or the like of a current cell at the location of the SSB of the neighboring cell.

Between two adjacent window lengths, the terminal device does not enable the rate matching, in other words, does not perform rate matching on the transmission resource of the serving cell based on the location of the reference signal resource of the neighboring cell. In this way, a waste of transmission resources is reduced.

The terminal device measures the reference signal in the corresponding window length, and reports the measurement result to the network device. The reference signal may include a reference signal of the serving cell, or may include a reference signal of the neighboring cell.

Before 302, the network device may further indicate that the measurement result reported by the terminal device needs to include a measurement result of at least one neighboring cell.

For example, the network device delivers indication information to the terminal device, to indicate that the measurement result reported by the terminal device includes the measurement result of the at least one neighboring cell.

The indication information may be carried in a measurement resource set configuration or a measurement reporting configuration for L1 measurement. For example, the network device specifies, for the terminal device in the measurement resource set configuration or the measurement reporting configuration for the L1 measurement, a maximum or minimum quantity of beams of the neighboring cell that are reported at a single time.

After receiving the indication information, the terminal device measures the reference signal. The reported measurement result needs to include the measurement result of the at least one neighboring cell. If no reference signal of any neighboring cell is measured, a special value is used for filling. For example, X indicates that no reference signal of any neighboring cell is measured.

In addition, the network device may further configure a second threshold for the terminal device. The second threshold may be configured for each neighboring cell, or may be uniformly configured. In other words, one threshold may correspond to one or more neighboring cells. For content related to the second threshold, refer to the foregoing embodiment.

303: The terminal device determines, based on the measurement result, whether rate matching needs to be performed in a time period between two adjacent rate matching windows, and this specifically includes:
If the measurement result includes the measurement result of the neighboring cell, rate matching is performed on the transmission resource of the serving cell between the two adjacent rate matching windows based on the location of the reference signal resource of the neighboring cell.

If the measurement result does not include the measurement result of the neighboring cell, rate matching is not performed between the two adjacent rate matching windows, in other words, rate matching is not performed on the transmission resource of the serving cell based on the location of the reference signal resource of the neighboring cell.

Further, if the measurement result includes the measurement result of the neighboring cell, and the measurement result is greater than or equal to the second threshold, rate matching is performed on the transmission resource of the serving cell between the two adj acent rate matching windows based on the location of the reference signal resource of the neighboring cell.

Further, if the measurement result includes the measurement result of the neighboring cell, and the measurement result is less than or equal to the second threshold, rate matching is not performed between the two adjacent rate matching windows, in other words, rate matching is not performed on the transmission resource of the serving cell based on the location of the reference signal resource of the neighboring cell.

There may be one or more neighboring cells, and the measurement result may be quality of at least one beam or the reference signal.

If the measurement result includes a measurement result of the serving cell, and the measurement result is less than or equal to a first threshold, rate matching is performed on the transmission resource of the serving cell between the two adjacent rate matching windows based on the location of the reference signal resource of the neighboring cell.

The measurement result may be the quality of the at least one beam or the reference signal of the serving cell.

For the first threshold and the second threshold, refer to the foregoing embodiment, and other content is also similar to that in the foregoing embodiment. For example, the first threshold and the second threshold may be associated with the neighboring cell, and a quantity of measurement times may be N. For specific content, refer to the descriptions in the foregoing embodiment, and details are not described again.

In the solution of the foregoing embodiment, the terminal device performs rate matching based on a configuration of the network device, so that a frequency of the rate matching is reduced, and transmission efficiency is improved. Further, rate matching is performed between adjacent window lengths based on the measurement result, to improve rate matching reliability.

In the foregoing embodiments, the network device determines, based on the measurement result reported by the terminal device, whether the terminal device enables the rate matching. In addition, with reference to the foregoing embodiments, in some implementations, the network device may further determine, based on the measurement result reported by the terminal device, whether to indicate the terminal device to adjust a reference signal resource set related to the rate matching of the neighboring cell. In this manner, the terminal device does not autonomously enable the rate matching, but after receiving the indication information delivered by the network device, determines, based on the indication information, whether to enable the rate matching.

For example, if the measurement result includes the measurement result of the neighboring cell or the measurement result of the neighboring cell is greater than a preset threshold, the network device reconfigures a measurement resource set of the neighboring cell for the terminal device. Further, the network device may indicate that the terminal device needs to perform rate matching on the measurement resource set, in other words, rate matching is performed on the transmission resource of the serving cell based on a location of the reference signal resource set of the neighboring cell. The measurement result may be the quality of the at least one beam or the reference signal.

For example, the network device reconfigures the measurement resource set of the neighboring cell for the terminal device by delivering RRC, and delivers the indication information, to indicate the terminal device to perform rate matching on the resource set, or indicate to perform rate matching on some or all of resources in the resource set. After receiving the indication information, the terminal device enables the rate matching for a corresponding resource set based on the indication information.

If rate matching is performed on the resource set, the rate matching is cell-level (or PCI-level) rate matching. If rate matching is performed on only some of resources (one or more resources), the rate matching is beam-level rate matching. Usually, one resource corresponds to one beam, or may correspond to a plurality of beams.

In the foregoing embodiments, if the measurement result of the neighboring cell includes a measurement result of one or more reference signal resources, after receiving the measurement result, the network device may deliver the indication information, for example, a MAC-CE, to the terminal device, to indicate an identifier of the one or more reference signal resources, or an identifier of a neighboring cell to which the one or more reference signal resources belong. After receiving the indication information, the terminal device enables the rate matching for the one or more reference signal resources, or may enable rate matching for all reference signal resources of the neighboring cell.

In another embodiment, the network device may deliver DCI to the terminal device, where the DCI is used to trigger aperiodic measurement reporting, and the DCI includes the indication information that indicates whether the rate matching for the reference signal resource of the neighboring cell is to be enabled for a resource set corresponding to a measurement trigger state. After receiving the indication information, the terminal device determines, based on the indication information, whether to perform, based on the location of the reference signal resource of the neighboring cell, rate matching on the resource set corresponding to the trigger state.

For example, the indication information is 1 bit, a value of the indication information is 1, and it indicates that the rate matching is enabled. To be specific, rate matching is performed on the resource set corresponding to the trigger state based on the location of the reference signal resource of the neighboring cell. If the value of the indication information is 0, it indicates that the rate matching is not enabled. Otherwise, the indication information may be represented by another value.

It may be understood that the examples in embodiments of this application are merely intended to help a person skilled in the art understand embodiments of this application, but are not intended to limit embodiments of this application to a specific scenario shown in the examples. It is clear that a person skilled in the art can make various equivalent modifications or changes based on the examples provided in embodiments of this application, and such modifications or changes also fall within the scope of embodiments of this application.

It may be further understood that the foregoing steps in embodiments of this application are merely examples for description, and are not strictly limited thereto. **In** addition, sequence numbers of the foregoing steps do not mean an execution sequence. The execution sequence of the processes should be determined based on functions and internal logic of the processes, and should not constitute any limitation on the implementation processes of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on the implementation processes of embodiments of this application.

It may be further understood that some message names in embodiments of this application, for example, a first message, do not limit the protection scope of embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

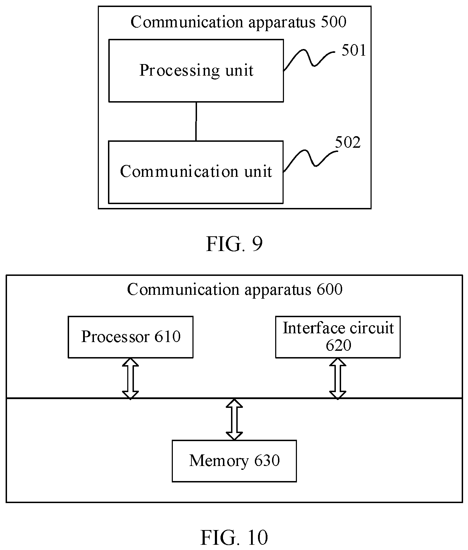

Same as the foregoing concept, as shown in FIG. 9, an embodiment of this application further provides a communication apparatus 500, configured to implement a function of the network device or the terminal device in the foregoing method. For example, the apparatus may be a software module or a chip system. In this embodiment of this application, the chip system may include a chip, or may include a chip and another discrete component. The communication apparatus 500 may include a processing unit 501 and a communication unit 502.

In this embodiment of this application, the communication unit may also be referred to as a transceiver unit, and may include a sending unit and/or a receiving unit, respectively configured to perform sending and receiving steps of the network device or the terminal device in the foregoing method embodiments. When the communication apparatus is the chip, sending and receiving respectively correspond to output and input.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 502 and that is configured to implement a receiving function may be considered as the receiving unit, and a component that is in the communication unit 502 and that is configured to implement a sending function may be considered as the sending unit. In other words, the communication unit 502 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 500 performs the function of the terminal device in the procedure shown in FIG. 5 in the foregoing embodiment,
the processing unit is configured to measure a reference signal delivered by a serving network device;
the communication unit is configured to report a measurement result to the serving network device; and
if the measurement result indicates that quality of the reference signal is less than or equal to a first threshold, rate matching is performed on a transmission resource of a serving cell based on a location of a reference signal resource of a neighboring cell.

In another implementation:
the processing unit is configured to measure a reference signal delivered by a network device in a neighboring cell;
the communication unit is configured to report a measurement result to a serving network device; and
if the measurement result indicates that quality of the reference signal is greater than or equal to a second threshold, rate matching is performed on a transmission resource of a serving cell based on a location of a reference signal resource of the neighboring cell.

When the communication apparatus 500 performs the function of the network device in the procedure shown in FIG. 5 in the foregoing embodiment,
the communication unit is configured to send a reference signal to a terminal device;
the processing unit is configured to receive a measurement result reported by the terminal device by measuring the reference signal; and
if the measurement result indicates that quality of the reference signal is less than or equal to a first threshold, it is determined that the terminal device is to perform rate matching on a transmission resource of a serving cell based on a location of a reference signal resource of a neighboring cell.

When the communication apparatus 500 performs the function of the terminal device in the procedure shown in FIG. 7 in the foregoing embodiment,
the processing unit is configured to perform layer 3 measurement;
the communication unit is configured to report a layer 3 measurement result to a network device; and
if the layer 3 measurement result includes a measurement result of a neighboring cell, rate matching is performed on a transmission resource of a serving cell based on a location of a reference signal resource of the neighboring cell.

When the communication apparatus 500 performs the function of the network device in the procedure shown in FIG. 7 in the foregoing embodiment,
the communication unit is configured to receive a layer 3 measurement result reported by a terminal device; and
the processing unit is configured to: if the layer 3 measurement result includes a measurement result of a neighboring cell, determine that the terminal device is to perform rate matching on a transmission resource of a serving cell based on a location of a reference signal resource of the neighboring cell.

When the communication apparatus 500 performs the function of the terminal device in the procedure shown in FIG. 8 in the foregoing embodiment,
the communication unit is configured to receive first configuration information delivered by a network device, where the first configuration information is used to configure a periodicity and a window length of rate matching (rate match); and
the processing unit is configured to perform, by the terminal device in a corresponding window length based on the periodicity of the rate match, rate matching on a transmission resource of a serving cell based on a location of a reference signal resource of a neighboring cell.

When the communication apparatus 500 performs the function of the network device in the procedure shown in FIG. 8 in the foregoing embodiment,
the communication unit is configured to deliver first configuration information to a terminal device, where the first configuration information is used to configure a periodicity and a window length of rate matching rate match and
the processing unit is configured to determine to perform, by the terminal device in a corresponding window length based on the periodicity of the rate match, rate matching on a transmission resource of a serving cell based on a location of a reference signal resource of a neighboring cell.

The foregoing are merely examples. The processing unit 501 and the communication unit 502 may further perform other functions. The communication unit implements a receiving and sending function, and the processing unit implements a function other than receiving and sending. For more detailed descriptions, refer to related descriptions in the foregoing method embodiments. Details are not described herein again.

FIG. 10 shows a communication apparatus 600 according to an embodiment of this application. The apparatus shown in FIG. 10 may be an implementation of a hardware circuit of the apparatus shown in FIG. 9. The communication apparatus is applicable to the foregoing flowcharts, and performs functions of the terminal device or the network device in the foregoing method embodiments. For ease of description, FIG. 10 merely shows main components of the communication apparatus.

As shown in FIG. 10, the communication apparatus 600 includes a processor 610 and an interface circuit 620. The processor 610 and the interface circuit 620 are coupled to each other. It may be understood that the interface circuit 620 may be an interface circuit, a pin, an interface circuit, or an input/output interface. Optionally, the communication apparatus 600 may further include a memory 630 that is configured to store instructions executed by the processor 610, store input data required by the processor 610 to run instructions, or store data generated after the processor 610 runs instructions. The interface circuit 620 may also be a transceiver.

When the communication apparatus 600 is configured to implement the method in the foregoing embodiment, the processor 610 is configured to implement a function of the processing unit 501 in FIG. 9, and the interface circuit 620 is configured to implement a function of the communication unit 502.

When the foregoing communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the network device chip implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

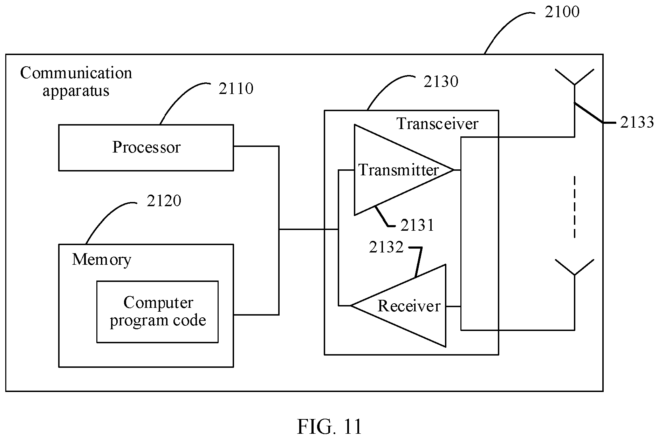

An embodiment of this application further provides a communication apparatus. The communication apparatus 2100 may be a terminal device or a network device, or may be a chip. The communication apparatus 2100 may be configured to perform operations performed by the terminal device or the network device in the foregoing method embodiments. FIG. 11 is a simplified diagram of a structure of the communication apparatus.

As shown in FIG. 11, when the communication apparatus 2100 is the terminal device, the communication apparatus includes a processor, a memory, and a transceiver. The memory may store computer program code. The transceiver includes a transmitter 2131, a receiver 2132, a radio frequency circuit (not shown in the figure), an antenna 2133, and an input/output apparatus (not shown in the figure). The processor is mainly configured to process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs the baseband signal to the radio frequency circuit; and the radio frequency circuit performs radio frequency processing on the baseband signal and then sends the radio frequency signal to the outside in the form of the electromagnetic wave through the antenna. When data is sent to the terminal device, the radio frequency circuit receives the radio frequency signal through the antenna, converts the radio frequency signal into the baseband signal, and outputs the baseband signal to the processor. The processor converts the baseband signal into data, and processes the data. For ease of description, FIG. 11 shows only one memory, one processor, and one transceiver. In an actual product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 11, the terminal device includes a processor 2110, a memory 2120, and a transceiver 2130. The processor 2110 may also be referred to as a processing unit, a processing board, a processing module, a processing apparatus, or the like, and the transceiver 2130 may also be referred to as a transceiver unit, a transceiver machine, a transceiver apparatus, or the like.

Optionally, a component that is in the transceiver 2130 and that is configured to implement a receiving function may be considered as a receiving unit, and a component that is in the transceiver 2130 and that is configured to implement a sending function may be considered as a sending unit. That is, the transceiver 2130 includes a receiver and a transmitter. The transceiver may also be sometimes referred to as a transceiver machine, a transceiver unit, a transceiver circuit, or the like. The receiver sometimes may also be referred to as a receiver machine, a receiving unit, a receiving circuit, or the like. The transmitter sometimes may also be referred to as a transmitter machine, a transmitting unit, a transmitter circuit, or the like.

It should be understood that FIG. 11 is merely an example but not a limitation. The terminal device including the transceiver unit and the processing unit may not depend on the structure shown in FIG. 11.

When the communication apparatus 2100 is a network device, for example, a base station, the communication apparatus 2100 includes a part 2110, a part 2120, and a part 2130. The part 2110 is mainly configured to perform baseband processing, control the base station, and the like. The part 2110 is usually a control center of the base station, may be usually referred to as a processor, and is configured to control the base station to perform a processing operation on a network device side in the foregoing method embodiments. The part 2120 is mainly configured to store computer program code and data. The part 2130 is mainly configured to receive and send a radio frequency signal, and perform conversion between the radio frequency signal and a baseband signal. The part 2130 may be usually referred to as a transceiver unit, a transceiver machine, a transceiver circuit, a transceiver, or the like. The transceiver unit in the part 2130 may also be referred to as a transceiver machine, a transceiver, or the like, and includes the antenna 2133 and the radio frequency circuit (not shown in the figure). The radio frequency circuit is mainly configured to perform radio frequency processing. Optionally, a component configured to implement a receiving function in a part 2210 may be considered as a receiver machine, and a component configured to implement a sending function may be considered as a transmitter machine. In other words, the part 2130 includes the receiver 2132 and the transmitter 2131. The receiver machine may also be referred to as a receiving unit, a receiver, a receiving circuit, or the like, and the transmitter machine may be referred to as a transmitting unit, a transmitter, a transmitting circuit, or the like.

The part 2110 and the part 2120 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, a plurality of boards may share one or more processors, a plurality of boards share one or more memories, or a plurality of boards share one or more processors at the same time.

It should be understood that FIG. 11 is merely an example rather than a limitation, and the network device including the processor, the memory, and the transceiver may not depend on the structure shown in FIG. 11.

When the communication apparatus 2100 is a chip, the chip includes a transceiver, a memory, and a processor. The transceiver may be an input/output circuit or a communication interface. The processor is a processor, a microprocessor, or an integrated circuit integrated on the chip.

An embodiment of this application further provides a computer-readable storage medium. The computer-readable storage medium stores computer instructions for implementing the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including a computer program or instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

An embodiment of this application further provides a chip, including at least one processor, configured to execute a computer program or computer instructions in a memory, to implement the methods in the foregoing embodiments.

Optionally, the processor is coupled to the memory through an interface.

Optionally, the chip apparatus further includes the memory, and the memory stores the computer program or the computer instructions.

The processor mentioned in any of the foregoing may be a general central processing unit, a microprocessor, an application-specific integrated circuit (application-specific integrated circuit, ASIC), or one or more of integrated circuits configured to control program execution of the method in the foregoing embodiments. The memory mentioned anywhere above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for explanations of related content and beneficial effects in any of the foregoing provided communication apparatuses, refer to corresponding method embodiments provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), a memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be understood that, the processor in embodiments of this application may be a central processing unit, or may be another general-purpose processor, a digital signal processor, an application-specific integrated circuit, or another programmable logic device, a transistor logic device, a hardware component, or any combination thereof. The general-purpose processor may be a microprocessor or any regular processor.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A rate matching method, comprising:
measuring, by a terminal device, a reference signal delivered by a serving network device;
reporting, by the terminal device, a measurement result to the serving network device; and
if the measurement result indicates that quality of the reference signal is less than or equal to a first threshold, performing rate matching on a transmission resource of a serving cell based on a location of a reference signal resource of a neighboring cell.

2. A rate matching method, comprising:
sending, by a serving network device, a reference signal to a terminal device;
receiving a measurement result reported by the terminal device by measuring the reference signal; and
if the measurement result indicates that quality of the reference signal is less than or equal to a first threshold, determining that the terminal device is to perform rate matching on a transmission resource of a serving cell based on a location of a reference signal resource of a neighboring cell.

3. The method according to claim 1 or 2, wherein the first threshold is associated with a first neighboring cell, and the location of the reference signal resource of the neighboring cell is a location of a reference signal resource of the first neighboring cell.

4. A rate matching method, comprising:
measuring, by a terminal device, a reference signal delivered by a network device in a neighboring cell;
reporting, by the terminal device, a measurement result to a serving network device; and
if the measurement result indicates that quality of the reference signal is greater than or equal to a second threshold, performing rate matching on a transmission resource of a serving cell based on a location of a reference signal resource of the neighboring cell.

5. The method according to claim 4, wherein the second threshold is associated with the neighboring cell.

6. The method according to claim 1, 2, or 4, wherein the reference signal resource of the neighboring cell is a synchronization signal block SSB or a channel state information reference signal CSI-RS resource of the neighboring cell.

7. The method according to claim 1, 2, or 4, wherein the measurement result comprises N consecutive measurement results or N measurement results in a period of time.

8. A rate matching method, comprising:
performing, by a terminal device, layer 3 measurement, and reporting a layer 3 measurement result to a network device; and
if the layer 3 measurement result comprises a measurement result of a neighboring cell, performing rate matching on a transmission resource of a serving cell based on a location of a reference signal resource of the neighboring cell.

9. A rate matching method, comprising:
receiving, by a network device, a layer 3 measurement result reported by a terminal device; and
if the layer 3 measurement result comprises a measurement result of a neighboring cell, determining that the terminal device is to perform rate matching on a transmission resource of a serving cell based on a location of a reference signal resource of the neighboring cell.

10. The method according to claim 8 or 9, wherein
if the layer 3 measurement result comprises the measurement result of the neighboring cell, and the measurement result is greater than or equal to a second threshold, rate matching is performed on the transmission resource of the serving cell based on the location of the reference signal resource of the neighboring cell.

11. The method according to claim 8 or 9, further comprising:
receiving, by the terminal device, indication information sent by the network device, wherein the indication information indicates to perform rate matching on the transmission resource of the serving cell based on the layer 3 measurement result.

12. The method according to claim 11, wherein the indication information is associated with the neighboring cell and is carried in a layer 3 measurement configuration.

13. A communication apparatus, comprising a transceiver unit and a processing unit, wherein
the transceiver unit is configured to perform a receiving and sending operation in the method according to any one of claims 1 to 12; and
the processing unit is configured to perform a processing operation in the method according to any one of claims 1 to 12.

14. A communication apparatus, comprising a processor and a memory, wherein
the processor is configured to execute a computer program or computer instructions in the memory, to enable the communication device to perform the method according to any one of claims 1 to 12.

15. A communication apparatus, comprising at least one processor, wherein the at least one processor is configured to perform the method according to any one of claims 1 to 12.

16. A non-volatile computer-readable storage medium, configured to store a computer program, wherein the computer program is loaded by a processor to perform the method according to any one of claims 1 to 12.

17. A communication system, comprising a terminal device configured to perform the method according to claim 1 and a network device configured to perform the method according to claim 2; or
a terminal device configured to perform the method according to claim 8, and a network device configured to perform the method according to claim 9.
